# EUROPÄISCHE PATENTSCHRIFT

(11) **EP 3 552 804 B1**
(45) Veröffentlichungstag und Bekanntmachung des Hinweises auf die Patenterteilung: **13.03.2024**
(21) Anmeldenummer: 19177090.8
(22) Anmeldetag: 18.08.2015
(51) Int. Cl.: B29C 64/153, B29C 64/40, B22F 3/24, B22F 5/04, B22F 10/28, B22F 10/47, B22F 10/64, B33Y 10/00, B33Y 40/00

(54) **VERFAHREN ZUM HERSTELLEN EINES DREIDIMENSIONALEN OBJEKTES**
METHOD FOR PRODUCING A THREE-DIMENSIONAL OBJECT
PROCÉDÉ DE FABRICATION D'UN OBJET TRIDIMENSIONNEL

(30) Priorität: 22.08.2014 DE 102014012425
(43) Veröffentlichungstag der Anmeldung: 16.10.2019
(62) Teilanmeldung aus: 15753354.8
(73) Patentinhaber: Concept Laser GmbH, 96215 Lichtenfels (DE)
(72) Erfinder: Herzog, Frank, 96215 Lichtenfels (DE)
(74) Vertreter: Hafner & Kohl PartmbB

(56) Entgegenhaltungen:
- EP-A1- 1 614 526
- WO-A1-2013/167903
- US-A1- 2006 236 544
- US-A1- 2012 255 176
- EOS: "Additive Fertigungsverfahren für die Zahnheilkunde", -, February 2013 (2013-02),

## Beschreibung

Die Erfindung betrifft ein Verfahren zum Herstellen eines dreidimensionalen Objekts durch aufeinander folgendes Verfestigen von Schichten eines mittels Strahlung verfestigbaren pulverartigen Baumaterials. Die Erfindung betrifft ebenfalls ein Produkt nach Anspruch 1.

Bei derartigen Verfahren handelt es sich im Allgemeinen um generative Prozesse zur Ausbildung bzw. Herstellung dreidimensionaler Objekte bzw. Gegenstände, wie z. B. technischer Bauteile. Das Grundprinzip derartiger Verfahren sieht vor, das jeweils herzustellende dreidimensionale Objekt durch aufeinanderfolgendes bzw. sukzessives Verfestigen von Schichten eines mittels Strahlung, typischerweise Laserstrahlung, verfestigbaren pulverartigen Baumaterials auszubilden. Bekannte Beispiele solcher Verfahren sind demnach Lasersinterverfahren, kurz SLS-Verfahren, oder Laserschmelzverfahren, kurz SLM-Verfahren.

Besonders bei der Herstellung großformatiger dreidimensionaler Objekte, d. h. bei der Herstellung von Objekten mit großen Abmessungen, wie z. B. Turbinenschaufeln, Gehäusestrukturen, können material- bzw. prozessbedingt Verzugseffekte auftreten, welche eine endmaßgenaue Herstellung des herzustellenden dreidimensionalen Objekts erschweren.

Gleichermaßen stellt die Handhabung großformatiger dreidimensionaler Objekte während bzw. nach der Herstellung regelmäßig eine Herausforderung dar. Das Dokument WO 2013/167903 A1 offenbart ein dreidimensionales Objekt, gebildet durch aufeinander folgendes Verfestigen von Schichten eines mittels Strahlung verfestigbaren pulverartigen Baumaterials, umfassend: eine Stützstruktur, gebildet durch aufeinander folgendes Verfestigen von Schichten des Baumaterials; mehrere, jeweils einen bestimmten Teilbereich des dreidimensionalen Objekts bildende einzelne Teilobjekte, gebildet durch aufeinander folgendes Verfestigen von Schichten des Baumaterials, wobei wenigstens ein Teilobjekt zumindest abschnittsweise auf der Stützstruktur ausgebildet ist. Mehrere Verbindungsbereiche werden durch aufeinander folgendes Verfestigen von Schichten des Baumaterials gebildet, wobei die Verbindungsbereiche zwischen wenigstens zwei der Teilobjekte angeordnet sind und die wenigstens zwei Teilobjekte zumindest teilweise verbinden. Das dreidimensionale Objekt ist von der Stützstruktur entfernbar.

Der Erfindung liegt die Aufgabe zugrunde, ein verbessertes Verfahren zum Herstellen von, insbesondere großformatigen, dreidimensionalen Objekten durch aufeinander folgendes Verfestigen von Schichten eines mittels Strahlung verfestigbaren pulverartigen Baumaterials anzugeben.

Diese Aufgabe wird durch ein Produkt gemäß Anspruch 1 und ein Verfahren gemäß Anspruch 16 gelöst. Die Unteransprüche betreffen vorteilhafte Weiterbildungen nach der Erfindung.

Das erfindungsgemäße Verfahren zum Herstellen eines dreidimensionalen Objekts durch aufeinander folgendes Verfestigen von Schichten eines mittels Strahlung verfestigbaren pulverartigen Baumaterials umfasst folgende Verfahrensschritte:
Zunächst wird eine Lasersinter- oder Laserschmelzanlage mit den üblichen Komponenten vorgesehen. Diese üblichen Komponenten sind ein Gehäuse mit einer darin untergebrachten Baukammer, wobei in der Baukammer eine Tragevorrichtung zum Tragen des Objektes vorgesehen wird. Außerdem ist eine Beschichtungsvorrichtung vorhanden, um Aufbaumaterial schichtweise auf einen Träger oder auf eine vorher aufgebrachte Schicht aufzubringen. Mit einer Bestrahlungseinrichtung werden die Schichten bestrahlt und dadurch an den dem jeweiligen Querschnitt des Objektes entsprechenden Stelen verfestigt, wozu die Bestrahlungseinrichtung in der Regel einen Scanner zur Ablenkung elektromagnetischer Strahlung einer Strahlungsquelle umfasst, die in der Regel als Laser ausgebildet ist. Sodann wird eine Stützstruktur ausgebildet, dies geschieht meistens auf einer Unterlage, wie z. B. einer Bauplatte. Jedenfalls sollte die Stützstruktur in ihrem Basisbereich miteinander verbunden sein. Der Aufbau der Stützstruktur erfolgt generativ.
- Ausbilden mehrerer, jeweils einen bestimmten Querschnittsteilbereich des herzustellenden dreidimensionalen Objekts bildender einzelner Teilobjekte durch aufeinander folgendes Verfestigen von Schichten des oder eines mittels Strahlung verfestigbaren pulverartigen Baumaterials, wobei wenigstens ein Teilobjekt zumindest abschnittsweise auf der Stützstruktur ausgebildet wird,
- Ausbilden von Verbindungsbereichen zwischen den Teilobjekten zur zumindest abschnittsweisen Verbindung der Teilobjekte unter Ausbildung des dreidimensionalen Objekts, und
- Entfernen des dreidimensionalen Objekts von der Stützstruktur

Verfahrensgemäß wird somit eine Stützstruktur zur zumindest abschnittsweisen Stützung des herzustellenden dreidimensionalen Objekts durch aufeinander folgendes Verfestigen von Schichten des oder eines mittels Strahlung verfestigbaren pulverartigen Baumaterials ausgebildet. Es erfolgt also neben der bzw. zusätzlich zur Ausbildung des eigentlich herzustellenden dreidimensionalen Objekts auch die Ausbildung einer Stützstruktur, deren Aufgabe und Funktion weiter unten näher erläutert wird. Wesentlich ist also, dass neben dem eigentlich herzustellenden dreidimensionalen Objekt auch die Stützstruktur durch aufeinander folgendes Verfestigen des oder eines mittels Strahlung verfestigbaren pulverartigen Baumaterials ausgebildet wird. Die Stützstruktur wird also in demselben Prozess ausgebildet, in welchem auch das eigentlich herzustellende dreidimensionale Objekt ausgebildet wird.

Die Stützstruktur dient zur zumindest abschnittsweisen, typischerweise vollständigen, Lagerung bzw. Stützung des herzustellenden dreidimensionalen Objekts. Das herzustellende dreidimensionale Objekt wird sonach sukzessive auf der Stützstruktur aufgebaut. Die Stützstruktur ist entsprechend in ihrer geometrischen Gestalt, insbesondere in ihrem Querschnitt, an die geometrische Gestalt, insbesondere den Querschnitt, des herzustellenden dreidimensionalen Objekts anzupassen bzw. angepasst. Um die beschriebene Stützfunktion zu erfüllen, bildet die Stützstruktur den Querschnitt des herzustellenden dreidimensionalen Objekts sonach typischerweise vollständig ab.

Die Stützstruktur umfasst typischerweise wenigstens ein Stützelement, welches zur zumindest abschnittsweisen Lagerung bzw. Stützung des oder eines Teils des herzustellenden dreidimensionalen Objekts dient. In der Regel umfasst die Stützstruktur jedoch mehrere Stützelemente gleicher oder ungleicher geometrischer Gestalt, d. h. insbesondere gleicher oder ungleicher Form respektive gleicher oder ungleicher Abmessungen. Die Stützelemente können in regelmäßiger oder unregelmäßiger Anordnung vorliegen. Die Stützelemente können z. B. steg- oder stützpfeilerartig ausgebildet sein und Verzweigungen aufweisen.

Die Ausbildung der Stützstruktur erfolgt typischerweise auf einer Bauplatte der Baukammer der Vorrichtung zur Durchführung des Verfahrens, d. h. insbesondere einer Vorrichtung zur Durchführung eines Lasersinterprozesses oder eines Laserschmelzprozesses.

Gleichzeitig bzw. simultan und somit gemeinsam mit der Ausbildung der Stützstruktur oder nach der Ausbildung der Stützstruktur wird das eigentlich herzustellende dreidimensionale Objekt ausgebildet. Wesentlich ist dabei, dass das dreidimensionale Objekt segmentiert ausgebildet wird. Es werden also mehrere, jeweils einen bestimmten Querschnittsteilbereich des herzustellenden dreidimensionalen Objekts bildende einzelne bzw. separate Teilobjekte ausgebildet, welche, wie weiter unten erläutert wird, im Weiteren unter Ausbildung des dreidimensionalen Objekts miteinander zu verbinden sind bzw. miteinander verbunden werden. Jedes Teilobjekt bildet also einen bestimmten Teil des Gesamtquerschnitts des dreidimensionalen Objekts ab. Das herzustellende dreidimensionale Objekt wird also nicht zusammenhängend über seinen vollständigen Querschnitt aufgebaut. Vielmehr werden sukzessive einzelne, jeweils einen bestimmten Teilbereich des herzustellenden dreidimensionalen Objekts bildende Teilobjekte aufgebaut. Die Teilobjekte werden positionsmäßig typischerweise derart relativ zueinander ausgebildet, dass deren Anordnung das gesamte dreidimensionale Objekt abbildet bzw. ergibt.

Die oder ein Teil der Teilobjekte können mit gleicher oder ungleicher geometrischer Gestalt, d. h. insbesondere gleicher oder ungleicher Form respektive gleicher oder ungleicher Abmessungen, ausgebildet werden. Die konkrete geometrische Gestalt jeweiliger Teilobjekte hängt von den durch diese jeweils abzubildenden Teilbereichen des herzustellenden dreidimensionalen Objekts und somit von dem Gesamtquerschnitt des herzustellenden dreidimensionalen Objekts ab. Hieraus ergibt sich, dass Abmessungen, Anordnung und Orientierung entsprechender Teilobjekte in Abhängigkeit der konkreten Abmessungen des jeweils herzustellenden Objekts ausgebildet werden.

Durch die, insbesondere querschnittliche, Auf- bzw. Unterteilung des herzustellenden dreidimensionalen Objekts in einzelne Teilobjekte können material- bzw. fertigungsbedingte Verzugseffekte reduziert werden. Dies begründet sich dadurch, dass entsprechende Verzugseffekte in den im Vergleich zu dem fertig hergestellten dreidimensionalen Objekt flächen- bzw. volumenmäßig erheblich kleineren Teilobjekten deutlich geringer ausfallen.

Aus obigen Ausführungen zu der Stützstruktur ergibt sich, dass die Teilobjekte jeweils zumindest abschnittsweise durch die Stützstruktur gestützt werden. Die Stützstruktur gewährleistet gleichermaßen, dass die Teilobjekte in ihrer relativen Position zueinander sicher angeordnet sind bzw. werden. Die Stützstruktur kann also gemeinsam mit den durch diese gelagerten bzw. gestützten Teilobjekten ohne Veränderung der Relativposition der einzelnen Teilobjekte zueinander bewegt werden, was einen erheblichen Vorteil im Hinblick auf die Handhabbarkeit des dreidimensionalen Objekts bedeutet. Selbstverständlich kann auch eine entsprechende Bauplatte samt der drauf ausgebildeten Stützstruktur und der darauf ausgebildeten Teilobjekte ohne Veränderung der Relativposition der einzelnen Teilobjekte zueinander bewegt werden.

Wie erwähnt, sind die einzelnen Teilobjekte zur Ausbildung des dreidimensionalen Objekts miteinander zu verbinden. Es ist also verfahrensgemäß vorgesehen, mehrere Verbindungsbereiche zwischen den einzelnen Teilobjekten zur zumindest abschnittsweisen Verbindung der Teilobjekte unter Ausbildung des dreidimensionalen Objekts auszubilden. Während der Ausbildung jeweiliger Verbindungsbereiche sind die Teilobjekte typischerweise durch die Stützstruktur gestützt, d. h. auf dieser, insbesondere in ihrer festen Relativposition zueinander, gelagert.

Entsprechende Verbindungsbereiche können grundsätzlich in beliebiger geometrischer Gestalt ausgebildet werden. Die Verbindungsbereiche können sonach z. B. punkt- oder linienförmig oder flächig ausgebildet werden. Die Verbindungsbereiche können zumindest teilweise z.B. auch als Stege, Brücken, Dehnungsstreifen, Stäbe und dergleichen ausgebildet werden oder die Form von ineinander eingreifenden Verzahnungen oder sonstigen Formschlusselementen aufweisen. Wesentlich ist, dass die Verbindungsbereiche benachbart angeordnete Teilobjekte stabil miteinander verbinden. Typischerweise verbindet ein Verbindungsbereich dabei wenigstens zwei unmittelbar benachbart angeordnete Teilobjekte. Abmessungen, Anordnung und Orientierung entsprechender Verbindungsbereiche werden typischerweise in Abhängigkeit der konkreten Abmessungen des jeweils herzustellenden Objekts ausgebildet.

Nach Verbindung der Teilobjekte miteinander kann eine Wärmebehandlung erfolgen, um Spannungen in dem dann zusammenhängenden Gesamtbauteil zu reduzieren.

In einem letzten Schritt des Verfahrens wird das vollständig ausgebildete dreidimensionale Objekt von der Stützstruktur entfernt. Das dreidimensionale Objekt kann dabei z. B. manuell oder (teil-)automatisiert von der Stützstruktur abgenommen werden. Möglich ist es selbstverständlich auch, dass die Stützstruktur manuell oder (teil-)automatisiert von dem dreidimensionalen Objekt abgenommen wird.

Aus vorstehenden Ausführungen ergibt sich, dass die Ausbildung des eigentlich herzustellenden dreidimensionalen Objekts in wenigstens zwei Stufen erfolgt. In einer ersten Stufe werden neben der Stützstruktur die einzelnen Teilobjekte ausgebildet. Die einzelnen Teilobjekte werden durch die Stützstruktur gestützt. Die Stützung beinhaltet, wie beschrieben, gleichermaßen eine (temporäre) Sicherung der Relativposition der einzelnen Teilobjekte zueinander. In einer weiteren bzw. in einer zweiten Stufe werden die einzelnen Teilobjekte durch die Ausbildung entsprechender Verbindungsbereiche miteinander verbunden. Hierdurch wird gleichermaßen das eigentlich herzustellende dreidimensionale Objekt ausgebildet.

Im Rahmen des Verfahrens liegen typischerweise wenigstens zwei Datensätze vor, auf Basis welcher eine schichtweise Verfestigung des bzw. allgemein eines Baumaterials zur Ausbildung der Stützstruktur sowie der Teilobjekte bzw. des Objekts erfolgt. Ein erster Datensatz betrifft die sukzessive Ausbildung der Stützstruktur. In dem ersten Datensatz sind sonach sämtliche Daten bezüglich der Stützstruktur enthalten. Ein weiterer bzw. zweiter Datensatz betrifft die sukzessive Ausbildung des Objekts bzw. der Teilobjekte. In dem weiteren bzw. zweiten Datensatz sind sonach sämtliche Daten bezüglich des Objekts bzw. bezüglich der Teilobjekte enthalten. Der zweite Datensatz beinhaltet entsprechend insbesondere auch eine segmentierte Auf- bzw. Unterteilung des Objekts in einzelne Teilobjekte.

Im Zusammenhang mit der Ausbildung entsprechender Verbindungsbereiche ist es denkbar, dass die Verbindungsbereiche in Abhängigkeit der Position der über diese zu verbindenden Teilobjekte bezüglich des herzustellenden dreidimensionalen Objekts geometrisch unterschiedlich ausgeführt werden. Die geometrische Gestalt, d. h. insbesondere Abmessungen und Form, jeweiliger Verbindungsbereiche kann also davon abhängen, an welcher Position sich diese bezogen auf das herzustellende dreidimensionale Objekt befinden. Die geometrische Gestalt jeweiliger Verbindungsbereiche hängt insofern auch davon ab, welche konkreten Teilobjekte diese miteinander verbinden. Es ist also z. B. denkbar, dass Verbindungsbereiche, welche in äußeren Bereichen, d. h. z. B. Randbereichen des dreidimensionalen Objekts, des herzustellenden dreidimensionalen Objekts angeordnete Teilobjekte miteinander verbinden, geometrisch anders ausgeführt werden, als Verbindungsbereiche, welche in im Vergleich inneren Bereichen, d. h. z. B. im Bereich des Schwerpunkts bzw. Zentrums des dreidimensionalen Objekts, angeordnete Teilobjekte miteinander verbinden. Derart können beispielsweise lokal unterschiedliche mechanische Beanspruchungen des fertigen dreidimensionalen Objekts, insbesondere im Zusammenhang mit einer spezifischen Anwendungs- bzw. Lastsituation, berücksichtigt werden. Konkret können Verbindungsbereiche, welche in äußeren Bereichen des dreidimensionalen Objekts angeordnete Teilobjekte miteinander verbinden, z. B. punktförmig ausgebildet werden, wohingegen Verbindungsbereich, welche in im Vergleich inneren Bereichen des dreidimensionalen Objekts angeordnete Teilobjekte miteinander verbinden, z. B. linienförmig ausgebildet werden.

Es ist auch denkbar, zunächst zumindest einen Teil der Teilobjekte nur über Verbindungsbereiche einer ersten geometrischen Gestalt, d. h. z. B. punktförmige Verbindungsbereiche, im Sinne einer Vorfixierung bzw. zur Realisierung einer solchen zu verbinden, um die Teilobjekte z. B. in einen handhabungsfähigen Zustand zu überführen, und die eigentliche Verbindung der Teilobjekte durch nachfolgend ausgebildete Verbindungsbereiche einer zweiten geometrischen Gestalt, d. h. z. B. linienförmige Verbindungsbereiche, bzw. nachfolgendes Ergänzen der Verbindungsbereiche der ersten geometrischen Gestalt , z. B. zu linienförmigen Verbindungsbereichen, auszubilden. Die Verbindungsbereiche der ersten geometrischen Gestalt können dabei mechanisch weniger stabil ausgeführt sein als jeweilige Verbindungsbereiche der zweiten geometrischen Gestalt.

Wie erwähnt, können die Stützstruktur und die Teilobjekte zumindest teilweise gleichzeitig bzw. simultan und somit gemeinsam ausgebildet werden. Es ist also möglich, zumindest einen Teil der Stützstruktur und zumindest einen Teil der Teilobjekte simultan bzw. gemeinsam auszubilden. Dies betrifft insbesondere Fälle, in denen über eine zu verfestigende Schicht in einem bestimmten Teilbereich der Baukammer gemäß den Abmessungen des herzustellenden dreidimensionalen Objekts bereits ein Teilobjekt auszubilden und in einem anderen Teilbereich der Baukammer entsprechend (noch) kein Teilobjekt, sondern ein Teil der Stützstruktur, d. h. z. B. ein Stützelement, auszubilden ist. Insgesamt ist es damit möglich, die Stützstruktur sowie das herzustellende dreidimensionale Objekt auf fertigungstechnisch besonders effiziente Weise auszubilden.

Das Ausbilden der Verbindungsbereiche kann außerhalb oder innerhalb der oder allgemein einer Vorrichtung zum Herstellen eines dreidimensionalen Objekts durch aufeinander folgendes Verfestigen von Schichten eines mittels Strahlung verfestigbaren pulverartigen Baumaterials, insbesondere einer Vorrichtung zum Durchführen eines Lasersinterprozesses oder eines Laserschmelzprozesses, durchgeführt werden. Die Verbindungsbereiche können durch eine herkömmliche Schweißvorrichtung hergestellt werden, d.h. als Schweißpunkte oder Schweißraupen ausgebildet werden. Die Verbindungsbereiche können aber auch in ein und demselben Prozess, in dem auch die Stützstruktur sowie die Teilobjekte ausgebildet werden, und somit in ein und derselben Vorrichtung ausgebildet werden. Dies ist jedoch nicht zwingend, vielmehr kann die Verbindung der einzelnen Teilobjekte auch in einem anderen Prozess und somit in einer anderen Vorrichtung erfolgen. Letzteres kann beispielsweise erforderlich sein, wenn an die Verbindungsbereiche besondere Anforderungen gestellt werden, welche sich nur in einem zu dem Prozess zur Ausbildung der Stützstruktur sowie der Teilobjekte separaten Prozess zufriedenstellend realisieren lassen. In diesem Zusammenhang ist nochmals zu erwähnen, dass die einzelnen Teilobjekte durch die Stützstruktur ohne weiteres, insbesondere unter Wahrung deren Relativposition zueinander, bewegt bzw. gehandhabt werden können, um diese z. B. zwischen entsprechende Prozesse implementierenden Vorrichtungen hin und her zu bewegen.

Die Verbindungsbereiche können derart ausgebildet werden, dass sie jeweils nebeneinander und/oder übereinander angeordnet auszubildende oder ausgebildete Teilobjekte zumindest abschnittsweise miteinander verbinden. Über einen Verbindungsbereich können also grundsätzlich sowohl horizontal, d. h. in einer horizontalen Ebene, angeordnete Teilobjekte als auch vertikal, d. h. in wenigstens zwei vertikal übereinander liegenden horizontalen Ebenen, angeordnete Teilobjekte miteinander verbunden werden.

Im Hinblick auf die (weitere) Reduzierung bzw. Kompensierung material- bzw. prozessbedingt auftretender mechanischer Spannungen innerhalb der Teilobjekte respektive innerhalb des dreidimensionalen Objekts kann wenigstens einen Teil der Verbindungsbereiche zumindest abschnittsweise derart elastisch federnd ausgebildet werden, dass verzugsbedingte mechanische Spannungen, d. h. Zug- und/oder Druckspannungen, der Teilobjekte und/oder des vollständigen dreidimensionalen Objekts zumindest teilweise reduziert werden. Die oder ein Teil der Verbindungsbereiche kann sonach z. B. über deren jeweilige geometrische Gestalt, d. h. insbesondere Abmessungen und Form, mit elastisch federnden Eigenschaften ausgebildet werden, über welche sich mechanische Spannungen innerhalb der oder zwischen den Teilobjekten reduzieren bzw. kompensieren lassen.

Mit der gleichen Zielrichtung ist es möglich, dass nebeneinander und/oder übereinander angeordnete Teilobjekte derart miteinander verbunden werden, dass zwischen diesen ein schlitzartiger Spaltraum gebildet wird. Die Ausbildung schlitzartiger Spalträume, kurz Schlitze, zwischen entsprechend benachbart angeordneten Teilobjekte stellt also gleichermaßen eine Möglichkeit zur Reduzierung bzw. Kompensation material- bzw. fertigungsbedingter mechanischer Spannungen dar. Die mechanische Verbindung jeweiliger Teilobjekte wird durch die Ausbildung entsprechender schlitzartiger Spalträume nicht beeinträchtigt. Die schlitzartigen Spalträume können geometrisch so gering bemessen, d. h. so schmal, sein, dass diese am fertigen Objekt nicht oder kaum zu erkennen sind. Typischerweise weist ein entsprechend gebildeter schlitzartiger Spaltraum eine Breite in einem Bereich von 1 bis 100 µm, insbesondere in einem Bereich von 10 bis 30 µm, auf. Selbstverständlich sind Ausnahmen nach oben und unten möglich.

Das Ausbilden entsprechender Verbindungsbereiche kann durch Verfestigen pulverartigen Baumaterials und/oder durch Aufschmelzen bereits verfestigter Teilobjektabschnitte jeweiliger hergestellter Teilobjekte erfolgen. Die Verbindungsbereiche können also aus einer auf die Teilobjekte aufgebrachten Schicht pulverartigen Baumaterials oder durch erneutes Aufschmelzen bereits verfestigter Teilobjektabschnitte ausgebildet werden. Das Verbinden jeweiliger Teilobjekte kann sonach während der Ausbildung der Teilobjekte selbst oder nachfolgend erfolgen. Selbstverständlich ist auch eine Kombination beider Varianten möglich.

Es wurde erwähnt, dass die Teilobjekte, d. h. typischerweise benachbart angeordnete Teilobjekte, durch entsprechende Verbindungsbereiche stabil miteinander verbunden werden. Vorzugsweise werden jeweilige zu verbindende Teilobjekte durch das Ausbilden entsprechender Verbindungsbereiche dabei stoffschlüssig miteinander verbunden. Stoffschlüssige Verbindungen sind typischerweise mechanisch hoch beanspruchbar bzw. mechanisch hoch stabil.

Jeweilige über Verbindungsbereiche zu verbindende Teilobjekte werden daher vorzugsweise miteinander verschweißt. Die Verbindungsbereiche stellen sonach vorzugsweise Schweißverbindungen dar, d. h. die Verbindungsbereiche liegen vorzugsweise als Schweißpunkte oder Schweißnähte vor bzw. umfassen solche. Die Verbindung der Teilobjekte vermittels Schweißens ist insofern praktikabel, als die im Rahmen des Verfahrens eingesetzten pulverartigen Baumaterialien typischerweise ohnehin schweißbar sind.

Das auf der Stützstruktur angeordnete dreidimensionale Objekt kann weiter bearbeitet bzw. behandelt werden. So ist es z. B. möglich, dass das weiterhin auf der Stützstruktur angeordnete dreidimensionale Objekt geeigneten Nachbearbeitungsprozessen zur Erhöhung der Oberflächengüte unterzogen wird. Möglich ist es auch, das weiterhin auf der Bauplatte und/oder Stützstruktur angeordnete dreidimensionale Objekt einer Wärmebehandlung zu unterziehen, etwa um gegebenenfalls vorhandene innere mechanische Spannungen abzubauen. Eine Wärmebehandlung beinhaltet insbesondere ein Erwärmen des Objekts auf eine Temperatur unterhalb der Schmelztemperatur des verwendeten Baumaterials, sodass ein Abbau innerer mechanischer Spannungen erzielt wird. Möglich ist es ferner, das weiterhin auf der Stützstruktur angeordnete dreidimensionale Objekt zu reinigen, d. h. insbesondere oberflächenseitig anhaftendes Baumaterial zu entfernen. Die Aufzählung vorstehender Weiterbearbeitungsmöglichkeiten bzw. Weiterbehandlungsmöglichkeiten ist allein beispielhaft und nicht abschließend zu verstehen.

Grundsätzlich kann das Ausbilden der Stützstruktur und/oder das Ausbilden der Teilobjekte jedoch auch zeitweise, d. h. für einen bestimmten Zeitraum, unterbrochen werden, um wenigstens eine die Eigenschaften der bis dahin ausgebildeten Stützstruktur und/oder die Eigenschaften der bis dahin ausgebildeten Teilobjekte beeinflussende Maßnahme, wie z. B. eine Wärmebehandlung, durchzuführen.

Wenigstens ein Teilobjekt kann mit wenigstens einem ein, insbesondere geschlossenes, Aufnahmevolumen begrenzenden Aufnahmeraum zur Aufnahme wenigstens eines Drittgegenstands ausgebildet werden. Bei einem solchen Drittgegenstand kann es sich beispielsweise um ein, z. B. sandwichartig aufgebautes, Leichtbauelement einer Leichtbaustruktur handeln. Dies ist insbesondere zweckmäßig, wenn es sich bei dem herzustellenden bzw. hergestellten dreidimensionalen Objekt um ein eine Tragfläche oder einen Teil einer Tragfläche bildendes Tragflächenelement handelt.

An dieser Stelle soll nochmals hervorgehoben werden, dass sich das Verfahren insbesondere zur Herstellung vergleichsweise großformatiger dreidimensionaler Objekte, insbesondere technischer Bauteile, eignet. Als dreidimensionales Objekt kann verfahrensgemäß sonach z. B. ein Kotflügelelement oder ein Turbinenschaufelelement oder ein Tragflächenelement hergestellt werden.

Im Rahmen des Verfahrens kann als pulverartiges Baumaterial sowohl Kunststoffpulver als auch Metallpulver verwendet werden. Unter einem Kunststoffpulver ist selbstverständlich auch ein Kunststoffpulvergemisch aus mehreren chemisch unterschiedlichen Kunststoffen zu verstehen. Ein Kunststoffpulver kann beispielsweise auf Polyamid oder PEEK basieren. Unter einem Metallpulver ist entsprechend selbstverständlich auch ein Metallpulvergemisch aus mehreren chemisch unterschiedlichen Metallen bzw. Metalllegierungen zu verstehen. Ein Metallpulver kann beispielsweise auf Aluminium oder auf Eisen basieren.

Die Erfindung betrifft ferner ein gemäß dem beschriebenen Verfahren hergestelltes dreidimensionales Objekt. Sämtliche Ausführungen im Zusammenhang mit dem Verfahren gelten analog für das dreidimensionale Objekt. Bei dem dreidimensionalen Objekt kann es sich z. B. um ein Kotflügelelement oder ein Turbinenschaufelelement oder ein Tragflächenelement handeln.

Die Erfindung ist anhand von Ausführungsbeispielen in den Zeichnungsfiguren näher erläutert. Dabei zeigen:
- Fig. 1, 2: jeweils eine Prinzipdarstellung zur Veranschaulichung der Durchführung eines Verfahrens gemäß einem Ausführungsbeispiel der Erfindung; und
- Fig. 3: eine vergrößerte Darstellung der in Fig. 2 gezeigten Einzelheit III.

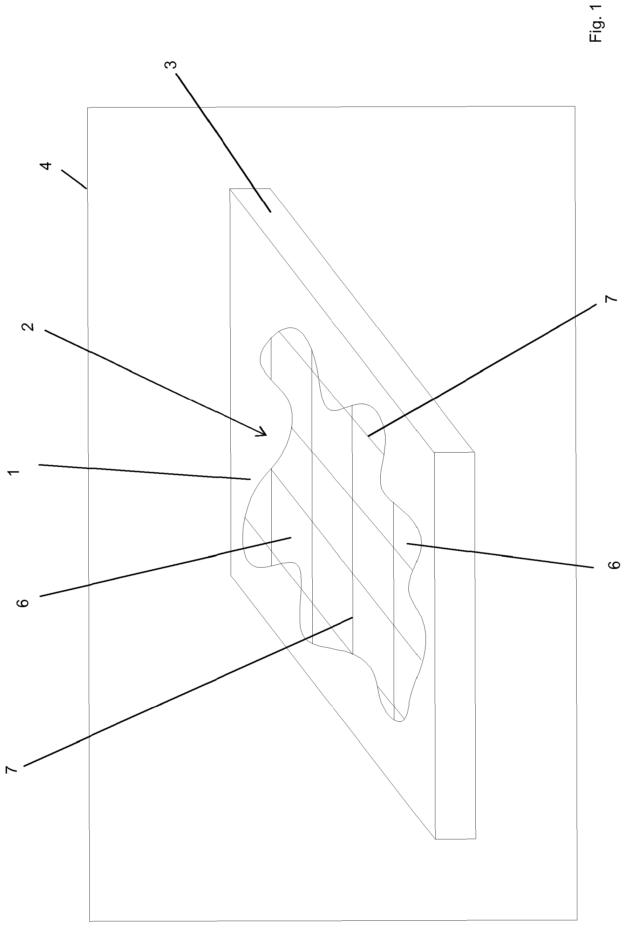

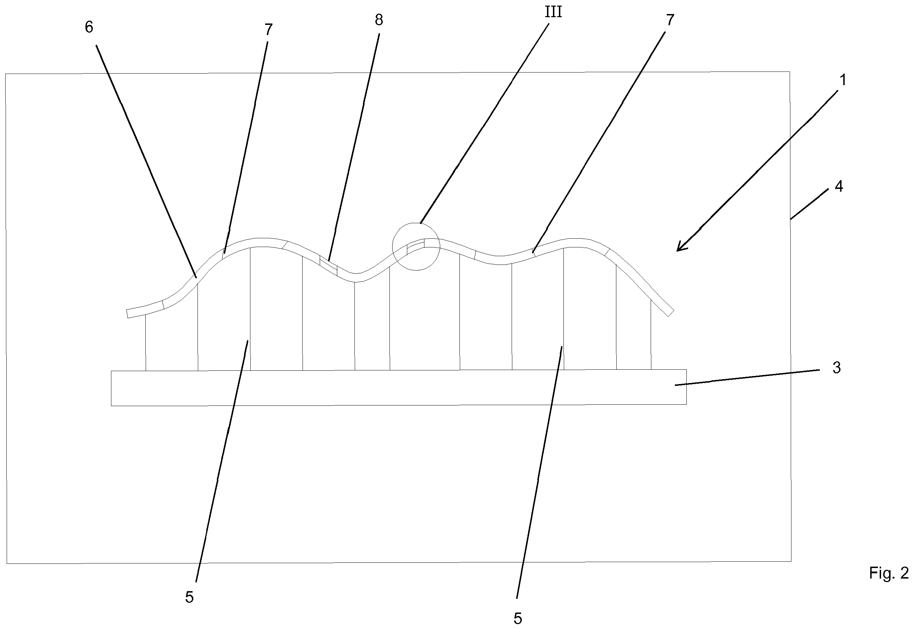

Die Fig. 1, 2 zeigen jeweils eine Prinzipdarstellung zur Veranschaulichung der Durchführung eines Verfahrens gemäß einem Ausführungsbeispiel der Erfindung.

Fig. 1 zeigt eine perspektivische Darstellung zu einem bestimmten Zeitpunkt des Verfahrens, zu welchem eine bestimmte Schicht pulverartigen Baumaterials verfestigt wird. Das dreidimensionale Objekt 1 ist zu diesem Zeitpunkt noch nicht vollständig hergestellt. Fig. 2 eine seitliche bzw. querschnittliche Darstellung zu einem bestimmten Zeitpunkt des Verfahrens.

Mit dem Verfahren lassen sich, insbesondere großformatige, dreidimensionale Objekte 1, insbesondere technische Bauteile, wie z. B. Kotflügelelemente, Turbinenschaufelelemente Tragflächenelemente, handeln. durch aufeinander folgendes Verfestigen von Schichten eines mittels Strahlung verfestigbaren pulverartigen Baumaterials herstellen. Konkret handelt es sich bei dem Verfahren um einen Lasersinterprozess, kurz SLS-Prozess, oder einen Laserschmelzprozess, kurz SLM-Prozess.

Im Rahmen des Verfahrens wird eine Stützstruktur 2 zur zumindest abschnittsweisen Stützung des herzustellenden dreidimensionalen Objekts 1 durch aufeinander folgendes Verfestigen von Schichten eines mittels Strahlung verfestigbaren pulverartigen Baumaterials ausgebildet. Es erfolgt sonach zusätzlich zu der generativen Ausbildung des eigentlich herzustellenden dreidimensionalen Objekts 1 auch eine generative Ausbildung einer Stützstruktur 2. Auch die Stützstruktur 2 wird also durch aufeinanderfolgendes Verfestigen des Baumaterials in demselben Prozess ausgebildet, in welchem auch das eigentlich herzustellende dreidimensionale Objekt 1 ausgebildet.

Die Ausbildung der Stützstruktur erfolgt auf einer Bauplatte 3 einer Baukammer 4 einer nicht näher gezeigten Vorrichtung zur Durchführung des Verfahrens, d. h. insbesondere einer Vorrichtung zur Durchführung eines Lasersinterprozesses oder eines Laserschmelzprozesses.

Die Stützstruktur 2 dient zur Lagerung bzw. Stützung des herzustellenden dreidimensionalen Objekts. Das herzustellende dreidimensionale Objekt 1 wird sukzessive auf der Stützstruktur 2 aufgebaut. Die Stützstruktur 2 ist entsprechend in ihrer geometrischen Gestalt, insbesondere in ihrem Querschnitt, an die geometrische Gestalt, insbesondere den Querschnitt, des herzustellenden dreidimensionalen Objekts 1 angepasst (vgl. Fig. 2). Dabei bildet die Stützstruktur 2 den Querschnitt des herzustellenden dreidimensionalen Objekts 1 in den in den Fig. gezeigten Ausführungsbeispielen vollständig ab.

Wie anhand von Fig. 1 ersichtlich ist, umfasst die Stützstruktur 2 mehrere Stützelemente 5. Die Stützelemente 5 können gleicher oder ungleicher geometrischer Gestalt, d. h. gleicher oder ungleicher Form respektive gleicher oder ungleicher Abmessungen, sein und in regelmäßiger oder unregelmäßiger Anordnung vorliegen. Die in den Fig. gezeigten Stützelemente 5 sind steg- oder stützpfeilerartig ausgebildet.

Das typischerweise gleichzeitig mit der Stützstruktur 2 ausgebildete dreidimensionale Objekt 1 wird segmentiert ausgebildet. Es werden also mehrere, jeweils einen bestimmten Querschnittsteilbereich des herzustellenden dreidimensionalen Objekts 1 bildende einzelne bzw. separate Teilobjekte 6 ausgebildet. Wie sich aus Fig. 2 ergibt, bildet jedes Teilobjekt 6 einen bestimmten Teil des Gesamtquerschnitts des dreidimensionalen Objekts 1 ab. Das herzustellende dreidimensionale Objekt wird also nicht sukzessive über seinen vollständigen Querschnitt aufgebaut, sondern es werden sukzessive einzelne Teilobjekte 6 aufgebaut. Die Teilobjekte 6 werden positionsmäßig derart relativ zueinander ausgebildet, dass deren Anordnung den Gesamtquerschnitt des dreidimensionalen Objekts 1 ergibt.

Durch die, insbesondere querschnittliche, Auf- bzw. Unterteilung des herzustellenden dreidimensionalen Objekts 1 in einzelne Teilobjekte 6 werden material- bzw. fertigungsbedingte Verzugseffekte reduziert, da entsprechende Verzugseffekte in den im Vergleich zu dem fertig hergestellten dreidimensionalen Objekt flächen- bzw. volumenmäßig erheblich kleineren Teilobjekten, wenn überhaupt, deutlich geringer ausfallen.

Die Stützstruktur 2 und die Teilobjekte 6 können, wie erwähnt, gleichzeitig bzw. simultan und somit gemeinsam ausgebildet werden. Anhand von Fig. 2 ist zu erkennen, dass über eine zu verfestigende Schicht pulverartigen Baumaterials in einem bestimmten Teilbereich der Baukammer 4, hier äußeren Bereichen, gemäß den Abmessungen des herzustellenden dreidimensionalen Objekts 1 bereits ein Teilobjekt 6 auszubilden und in einem anderen Teilbereich der Baukammer 4, hier inneren Bereichen, (noch) kein Teilobjekt 6, sondern ein Teil der Stützstruktur 2, d. h. Stützelemente 5, auszubilden ist.

Die Stützstruktur 2 gewährleistet, dass die Teilobjekte 6 in ihrer relativen Position zueinander sicher angeordnet sind bzw. werden. Die Stützstruktur 2 kann also gemeinsam mit den durch diese gelagerten bzw. gestützten Teilobjekten 6 ohne Veränderung der Relativposition der einzelnen Teilobjekte 6 zueinander bewegt bzw. gehandhabt werden. Selbstverständlich kann auch die Bauplatte 3 samt der drauf ausgebildeten Stützstruktur 2 und der darauf ausgebildeten Teilobjekte 6 ohne Veränderung der Relativposition der einzelnen Teilobjekte 6 zueinander bewegt werden.

Zur Verbindung der Teilobjekte 6 werden Verbindungsbereiche 7 zwischen den Teilobjekten 6 zur zumindest abschnittsweisen Verbindung der Teilobjekte 6 unter Ausbildung des dreidimensionalen Objekts 1 ausgebildet. Während der Ausbildung der in den Fig. mit verstärkter Strichlinie dargestellten Verbindungsbereiche 7 sind die Teilobjekte 6 in der Regel durch die Stützstruktur 2 gestützt bzw. gelagert. Das Ausbilden entsprechender Verbindungsbereiche 7 kann durch Verfestigen pulverartigen Baumaterials und/oder durch Aufschmelzen bereits verfestigter Teilobjektabschnitte jeweiliger hergestellter Teilobjekte 6 erfolgen.

Die Verbindungsbereiche 7 verbinden die Teilobjekte 6 typischerweise stoffschlüssig miteinander. Die stoffschlüssige Verbindung erfolgt typischerweise über Schweißverbindungen, die Teilobjekte 6 werden daher typischerweise miteinander verschweißt.

Entsprechende Verbindungsbereiche 7 können grundsätzlich in beliebiger geometrischer Gestalt ausgebildet werden. In Fig. 1 sind beispielhaft sowohl punkt- als auch linienförmige Verbindungsbereiche 7 dargestellt.

Entsprechende Verbindungsbereiche 7 können in Abhängigkeit der Position der über diese zu verbindenden Teilobjekte 6 bezüglich des herzustellenden dreidimensionalen Objekts 1 geometrisch unterschiedlich ausgeführt werden. Die geometrische Gestalt, d. h. insbesondere Abmessungen und Form, jeweiliger Verbindungsbereiche 7 kann also davon abhängen, an welcher Position sich diese bezogen auf das herzustellende dreidimensionale Objekt 1 befinden. In Fig. 1 sind rein exemplarisch Verbindungsbereiche 7, welche in äußeren Bereichen des dreidimensionalen Objekts 1 angeordnete Teilobjekte miteinander verbinden, vornehmlich punktförmig ausgebildet, wohingegen Verbindungsbereiche 7, welche in im Vergleich inneren Bereichen des dreidimensionalen Objekts 1 angeordnete Teilobjekte 6 miteinander verbinden, vornehmlich linienförmig ausgebildet sind.

Es ist auch denkbar, zunächst einen Teil der Teilobjekte 6 nur über Verbindungsbereiche 7 einer ersten geometrischen Gestalt, z. B. punktförmige Verbindungsbereiche 7, zur Realisierung einer Vorfixierung zu verbinden, um die Teilobjekte 6 z. B. in einen handhabungsfähigen Zustand zu überführen, und die eigentliche Verbindung der Teilobjekte 6 durch nachfolgend ausgebildete Verbindungsbereiche 7 einer zweiten geometrischen Gestalt, z. B. linienförmige Verbindungsbereiche 7, bzw. nachfolgendes Ergänzen der Verbindungsbereiche 7 der ersten geometrischen Gestalt , z. B. zu linienförmigen Verbindungsbereichen, auszubilden. Jeweilige Verbindungsbereiche 7 der ersten geometrischen Gestalt können mechanisch weniger stabil ausgeführt sein als jeweilige Verbindungsbereiche 7 der zweiten geometrischen Gestalt.

Das Ausbilden entsprechender Verbindungsbereiche 7 kann außerhalb oder innerhalb der das Verfahren implementierenden Vorrichtung durchgeführt werden. Mithin können auch die Verbindungsbereiche 7 in ein und demselben Prozess, in dem auch die Stützstruktur 2 sowie die Teilobjekte 6 ausgebildet werden, ausgebildet werden.

Im Hinblick auf die (weitere) Reduzierung bzw. Kompensierung material- bzw. prozessbedingt auftretender mechanischer Spannungen innerhalb der Teilobjekte respektive innerhalb des dreidimensionalen Objekts können einzelne oder mehrere Verbindungsbereiche 7 zumindest abschnittsweise derart elastisch federnd ausgebildet werden, dass verzugsbedingte mechanische Spannungen, d. h. Zug- und/oder Druckspannungen, der Teilobjekte 6 bzw. des vollständigen dreidimensionalen Objekts 1 zumindest teilweise reduziert werden. Die Verbindungsbereiche 7 können also, z. B. über deren jeweilige geometrische Gestalt mit elastisch federnden Eigenschaften ausgebildet werden, über welche sich mechanische Spannungen innerhalb der oder zwischen den Teilobjekten 6 reduzieren bzw. kompensieren lassen.

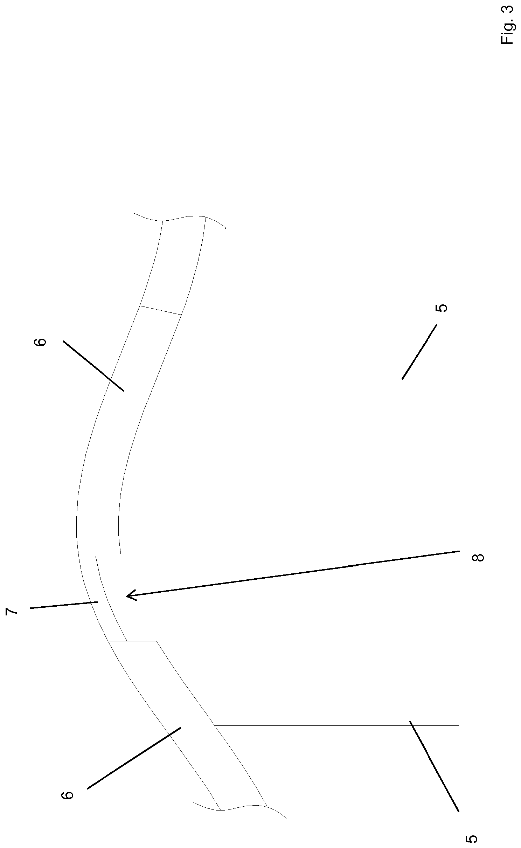

Zweckmäßig werden nebeneinander und/oder übereinander angeordnete Teilobjekte 6 über entsprechende Verbindungsbereiche 7 derart miteinander verbunden, dass zwischen diesen ein schlitzartiger Spaltraum 8, d. h. ein Schlitz, gebildet wird bzw. verbleibt. Ein solcher schlitzartiger Spaltraum 8 ist in Fig. 3 gezeigt. Die Ausbildung schlitzartiger Spalträume 8 zwischen benachbart angeordneten Teilobjekten 6 stellt ebenso eine Möglichkeit zur Reduzierung bzw. Kompensation material- bzw. fertigungsbedingter mechanischer Spannungen dar. Die mechanische Verbindung jeweiliger Teilobjekte wird durch die Ausbildung entsprechender schlitzartiger Spalträume nicht beeinträchtigt. Die schlitzartigen Spalträume 8 sind typischerweise so gering bemessen, d. h. so schmal, dass diese an dem fertigen Objekt 1 nicht oder kaum zu erkennen sind. Typischerweise weisen die schlitzartigen Spalträume 8 eine Breite in einem Bereich von 1 bis 100 µm, insbesondere in einem Bereich von 10 bis 30 µm, auf.

In einem letzten Schritt des Verfahrens wird das vollständig ausgebildete dreidimensionale Objekt 1 von der Stützstruktur 2 z. B. manuell oder (teil-) automatisiert entfernt.

Vor der Entfernung des dreidimensionalen Objekts 1 von der Stützstruktur 2 bzw. der Bauplatte kann das dreidimensionale Objekt 1 jedoch bearbeitet bzw. behandelt werden. So ist es z. B. möglich, dass das auf der Stützstruktur 2 angeordnete dreidimensionale Objekt 1 geeigneten Nachbearbeitungsprozessen zur Erhöhung der Oberflächengüte unterzogen wird. Möglich ist es auch, das weiterhin auf der Stützstruktur 2 angeordnete dreidimensionale Objekt 1 einer Wärmebehandlung zu unterziehen, um vorhandene innere mechanische Spannungen abzubauen. Möglich ist es ferner, das weiterhin auf der Stützstruktur 2 angeordnete dreidimensionale Objekt 1 zu reinigen, d. h. insbesondere oberflächenseitig anhaftendes Baumaterial zu entfernen.

Um wenigstens eine die Eigenschaften der bis dahin ausgebildeten Stützstruktur 2 und/oder die Eigenschaften der bis dahin ausgebildeten Teilobjekte 6 beeinflussende Maßnahme, d. h. z. B. eine Wärmebehandlung, durchzuführen, kann das Ausbilden der Stützstruktur 2 und/oder das Ausbilden der Teilobjekte 6 auch zeitweise, d. h. für einen bestimmten Zeitraum, unterbrochen werden.

Ein oder mehrere Teilobjekte 6 können mit einem ein, insbesondere geschlossenes, Aufnahmevolumen begrenzenden Aufnahmeraum zur Aufnahme wenigstens eines Drittgegenstands ausgebildet werden. Bei einem solchen Drittgegenstand kann es sich beispielsweise um ein, z. B. sandwichartig aufgebautes, Leichtbauelement einer Leichtbaustruktur handeln. Dies ist insbesondere zweckmäßig, wenn es sich bei dem dreidimensionalen Objekt 1 um ein eine Tragfläche oder einen Teil einer Tragfläche bildendes Tragflächenelement handelt.

### BEZUGSZEICHENLISTE

- 1: Objekt
- 2: Stützstruktur
- 3: Bauplatte
- 4: Baukammer
- 5: Stützelement
- 6: Teilobjekt
- 7: Verbindungsbereich
- 8: Spaltraum

## Patentansprüche

1. Dreidimensionales Objekt (1), gebildet durch aufeinander folgendes Verfestigen von Schichten eines mittels Strahlung verfestigbaren pulverartigen Baumaterials, umfassend:
eine Stützstruktur (2), gebildet durch aufeinander folgendes Verfestigen von Schichten des Baumaterials;
mehrere, jeweils einen bestimmten Teilbereich des dreidimensionalen Objekts (1) bildende einzelne Teilobjekte (6), gebildet durch aufeinander folgendes Verfestigen von Schichten des Baumaterials, wobei wenigstens ein Teilobjekt (6) zumindest abschnittsweise auf der Stützstruktur (2) ausgebildet ist, wobei jedes Teilobjekt (6) flächen- oder volumenmäßig kleiner als das dreidimensionale Objekt (1) ausgebildet ist, um material- oder fertigungsbedingte Verzugseffekte des dreidimensionalen Objekts (1) zu reduzieren, und
mehrere Verbindungsbereiche (7), gebildet durch aufeinander folgendes Verfestigen von Schichten des Baumaterials und/oder durch eine Schweißeinrichtung, welche zur Erzeugung von Schweißpunkten oder Schweißkugeln eingerichtet ist, wobei die Verbindungsbereiche (7) zwischen wenigstens zwei der Teilobjekte (6) angeordnet sind und die wenigstens zwei Teilobjekte (6) zumindest teilweise verbinden, wobei das dreidimensionale Objekt (1) von der Stützstruktur (2) entfernbar ist.

2. Dreidimensionales Objekt nach Anspruch 1, **dadurch gekennzeichnet, dass** das aufeinander folgende Verfestigen von Schichten des Baumaterials wenigstens teilweise vermittels einer der SLS- oder SLM-Anlage durchgeführt ist.

3. Dreidimensionales Objekt nach Anspruch 1 oder 2, **dadurch gekennzeichnet, dass** wenigstens ein Teil der Verbindungsbereiche (7) nebeneinander und/oder übereinander angeordnete Teilobjekte (6) zumindest abschnittsweise miteinander verbinden.

4. Dreidimensionales Objekt nach einem der Ansprüche 1 bis 3, **dadurch gekennzeichnet, dass** wenigstens ein Teil der Verbindungsbereiche (7) in Abhängigkeit der Position der über diese verbundenen Teilobjekte (6) geometrisch unterschiedlich ausgeführt sind.

5. Dreidimensionales Objekt nach einem der Ansprüche 1 bis 4, **gekennzeichnet durch** eine erste Mehrzahl von Verbindungsbereichen (7) einer ersten geometrischen Gestalt und eine zweite Mehrzahl an Verbindungsbereichen (7) einer zweiten geometrischen Gestalt.

6. Dreidimensionales Objekt nach einem der Ansprüche 1 bis 5, **dadurch gekennzeichnet, dass** wenigstens ein Teil der Verbindungsbereiche (7) eine erste geometrische Gestalt und eine zweite geometrische Gestalt aufweisen.

7. Dreidimensionales Objekt nach Anspruch 5 oder 6, **dadurch gekennzeichnet, dass** die erste geometrische Gestalt eine punktförmige geometrische Gestalt aufweist und/oder die zweite geometrische Gestalt eine linienförmige geometrische Gestalt aufweist.

8. Dreidimensionales Objekt nach einem der Ansprüche 1 bis 7, **dadurch gekennzeichnet, dass** wenigstens ein Teil der Verbindungsbereiche (7) zumindest abschnittsweise elastisch federnd ausgebildet ist, sodass verzugsbedingte mechanische Spannungen der Teilobjekte (6) und/oder des Objekts (1) reduziert werden.

9. Dreidimensionales Objekt nach einem der Ansprüche 1 bis 8, **gekennzeichnet durch** einen schlitzartigen Spaltraum (8) zwischen nebeneinander und/oder übereinander angeordneten Teilobjekten (6).

10. Dreidimensionales Objekt nach Anspruch 9, **dadurch gekennzeichnet, dass** der schlitzartige Spaltraum (8) eine Breite zwischen 1 und 100 µm aufweist.

11. Dreidimensionales Objekt nach einem der Ansprüche 1 bis 10, **dadurch gekennzeichnet, dass** wenigstens ein Teil der Verbindungsbereiche (7) durch Verfestigen pulverartigen Baumaterials und/oder wenigstens ein Teil der Verbindungsbereiche (7) durch Aufschmelzen bereits verfestigter Teilobjektabschnitte bereits hergestellter Teilobjekte (6) gebildet sind.

12. Dreidimensionales Objekt nach einem der Ansprüche 1 bis 11, **dadurch gekennzeichnet, dass** wenigstens ein Teil der Teilobjekte (6) durch das Ausbilden entsprechender Verbindungsbereiche (7) stoffschlüssig miteinander verbunden sind.

13. Dreidimensionales Objekt nach Anspruch 1 bis 12, **gekennzeichnet durch** wenigstens zwei Teilobjekte (6) mit gleicher oder unterschiedlicher geometrischer Gestalt.

14. Dreidimensionales Objekt nach einem der Ansprüche 1 bis 13, **gekennzeichnet durch** wenigstens einen Drittgegenstand in Form eines Leichtbauelements einer Leichtbaustruktur; wobei wenigstens ein Teilobjekt (6) mit wenigstens einem ein, insbesondere geschlossenes, Aufnahmevolumen begrenzenden Aufnahmeraum zur Aufnahme wenigstens eines entsprechenden Drittgegenstands ausgebildet ist.

15. Dreidimensionales Objekt nach einem der Ansprüche 1 bis 14, **dadurch gekennzeichnet, dass** wenigstens ein Teil der Verbindungsbereiche (7) zumindest teilweise als Stege, Brücken, Dehnungsstreifen, Stäbe und dergleichen ausgebildet werden oder die Form von ineinander eingreifenden Verzahnungen oder sonstigen Formschlusselementen aufweisen.

16. Verfahren zum Herstellen eines dreidimensionalen Objekts (1) durch aufeinander folgendes Verfestigen von Schichten eines mittels Strahlung verfestigbaren pulverartigen Baumaterials, mit folgenden Verfahrensschritten:
- Ausbilden eines Objekts (1) und einer Stützstruktur (2) unter Verwendung einer Lasersinter- oder Laserschmelzanlage, wobei das Ausbilden des Objekts (1) und der Stützstruktur (2) umfasst:
-- Ausbilden der Stützstruktur (2) zur zumindest abschnittsweisen Stützung des herzustellenden dreidimensionalen Objekts (1) durch aufeinander folgendes Verfestigen von Schichten des Baumaterials,
-- Ausbilden mehrerer, jeweils einen bestimmten Teilbereich des herzustellenden dreidimensionalen Objekts (1) bildender einzelner Teilobjekte (6) durch aufeinander folgendes Verfestigen von Schichten des Baumaterials, wobei jedes Teilobjekt (6) flächen- oder volumenmäßig kleiner als das dreidimensionale Objekt ausgebildet wird, um material- oder fertigungsbedingte Verzugseffekte des dreidimensionalen Objekts (1) , wobei wenigstens ein Teilobjekt (6) zumindest abschnittsweise auf der Stützstruktur (2) ausgebildet wird, wobei
jeweilige Verbindungsbereiche (7) zwischen den Teilobjekten (6) zur zumindest abschnittsweisen Verbindung der Teilobjekte (6) unter Ausbildung des dreidimensionalen Objekts (1) durch aufeinander folgendes Verfestigen von Schichten des Baumaterials und/oder durch eine Schweißeinrichtung, welche zur Erzeugung von Schweißpunkten oder Schweißkugeln eingerichtet ist, ausgebildet werden,
-- Entfernen des dreidimensionalen Objekts (1) von der Stützstruktur (2).

## Claims

1. Three-dimensional object (1), formed by successive solidification of layers of a powder-like building material that can be solidified by radiation, comprising:
a support structure (2) formed by successive solidification of layers of the building material;
several, respectively, a definite portion of the three-dimensional object (1) forming individual sub-objects (6), formed by successive solidification of layers of the building material, wherein at least one sub-object (6) is formed at least in part on the supporting structure (2), wherein each sub-object (6) is formed in terms of area or volume less than the three-dimensional object (1) to reduce material or production-related distortion effects of the three-dimensional object (1), and
several joint areas (7), formed by successive solidification of layers of the building material and/or by a welding device, which is arranged for the generation of weld points or weld balls, wherein the connection areas (7) are arranged between at least two of the sub-objects (6) and which at least partially connect two sub-objects (6), wherein
the three-dimensional object (1) is removable from the support structure (2).

2. Three-dimensional object according to claim 1, **characterised in that** the successive solidification of layers of the building material is carried out at least partially by means of one of the SLS or SLM system.

3. Three-dimensional object according to claim 1 or 2, **characterised in that** at least a portion of the connection areas (7) adjacent to each other and/or superimposed sub-objects (6) connect at least partwise with each other.

4. Three-dimensional object according to any one of claims 1 to 3, **characterised in that** at least a portion of the connection regions (7) are geometrically different in relation to the position of the connected sub-objects (6).

5. Three-dimensional object according to one of claims 1 to 4, **characterised by** a first plurality of connecting regions (7) of a first geometric shape and a second plurality of connecting regions (7) of a second geometric shape.

6. Three-dimensional object according to any one of claims 1 to 5, **characterised in that** at least one part of the connecting regions (7) have a first geometric shape and a second geometric shape.

7. Three-dimensional object according to claim 5 or 6, **characterised in that** the first geometric shape has a point-shaped geometric shape and/or the second geometric shape has a linear geometric shape.

8. Three-dimensional object according to any one of claims 1 to 7, **characterised in that** at least part of the connection regions (7) is formed at least partially elastically springy, so that warping-related mechanical stresses of the sub-objects (6) and/or the object (1) are reduced.

9. Three-dimensional object according to any one of claims 1 to 8, **characterised by** a slot-like gap (8) between adjacent and/or superimposed sub-objects (6).

10. Three-dimensional object according to claim 9, **characterised in that** the slot-like gap (8) has a width between 1 and 100 µm.

11. Three-dimensional object according to any one of claims 1 to 10, **characterised in that** at least one part of the connection regions (7) are formed by solidifying powder-like building materials and/or at least a part of the connection areas (7) by melting already solidified sub-object portions of already produced sub-objects (6).

12. Three-dimensional object according to any one of claims 1 to 11, **characterised in that** at least one part of the sub-objects (6) are connected to each other by forming corresponding connection areas (7).

13. Three-dimensional object according to claim 1 to 12, **characterised by** at least two sub-objects (6) having the same or different geometric shape.

14. Three-dimensional object according to any one of claims 1 to 13, **characterised by** at least one third object in the form of a lightweight component of a lightweight structure; wherein at least one sub-object (6) with at least one, in particular closed, receiving volume limiting receiving space is formed for receiving at least one corresponding third object.

15. Three-dimensional object according to any one of claims 1 to 14, **characterised in that** at least a part of the connecting regions (7) are formed at least partially as bridges, bridges, stretch marks, rods and the like, or the form of interlocking gears or other form-closing elements.

16. Method for producing a three-dimensional object (1) by successive solidification of layers of a powder-like building material that can be solidified by radiation, with the following process steps:
- forming an object (1) and a support structure (2) using a laser sintering or laser melting plant, wherein the formation of the object (1) and the support structure (2) comprises:
- forming the support structure (2) for at least sectional support of the three-dimensional object (1) to be produced by successive solidification of layers of the building material,
- \ forming several, respectively a definite portion of the three-dimensional object (1) forming individual sub-objects (6) by successive solidification of layers of the building material, wherein each sub-object (6) is formed in terms of area or volume less than the three-dimensional object to material or production-related deformation effects of the three-dimensional object (1), wherein at least one sub-object (6) is formed at least in part on the support structure (2), wherein
each connection region (7) between the sub-objects (6) for at least sectional connection of the sub-objects (6) under the formation of the three-dimensional object (1) by successive solidification of layers of the building material and/or by a welding device, which is set up for the generation of welding points or weld balls, are formed,
- removing the three-dimensional object (1) from the support structure (2).

## Revendications

1. Objet tridimensionnel (1) formé par solidification successive de couches d'un matériau de construction en poudre solidifiable par rayonnement, comprenant:
une structure de support (2), formée par la solidification successive des couches du matériau de construction;
plusieurs sous-objets individuels formant une partie déterminée de l'objet tridimensionnel (1), formés par solidification successive de couches du matériau de construction, où au moins un objet partiel (6) est formé au moins en section sur la structure de support (2), chaque sous-objet (6) étant formé en surface ou en volume inférieur à l'objet tridimensionnel (1) afin de réduire les effets de décélération liés au matériau ou à la fabrication de l'objet tridimensionnel (1), et
plusieurs zones de connexion (7), formées par solidification successive de couches du matériau de construction et/ou par un dispositif de soudage conçu pour produire des points de soudage ou des billes de soudage, les zones de connexion (7) étant disposées entre au moins deux des sous-objets (6) et reliant au moins deux sous-objets (6) au moins partiellement, L'objet tridimensionnel (1) est démontable de la structure de support (2).

2. Objet tridimensionnel selon la revendication 1, **caractérisé en ce que** la solidification successive des couches du matériau de construction est effectuée au moins partiellement par l'intermédiaire d'une installation SLS ou SLM.

3. Objet tridimensionnel selon la revendication 1 ou 2, **caractérisé en ce qu'au moins** une partie des zones de connexion (7) relie les objets partiels côte à côte et/ou superposés les uns aux autres (6), au moins par sections.

4. Objet tridimensionnel selon l'une des revendications 1 à 3, **caractérisé en ce qu'au moins** une partie des zones de connexion (7) sont géométriquement différentes en fonction de la position des sous-objets reliés par ces derniers (6).

5. Objet tridimensionnel selon l'une des revendications 1 à 4, **caractérisé par** une première majorité de zones de connexion (7) d'une première forme géométrique et une deuxième majorité de zones de connexion (7) d'une seconde forme géométrique.

6. Objet tridimensionnel selon l'une des revendications 1 à 5, **caractérisé en ce qu'au moins** une partie des zones de connexion (7) présentent une première forme géométrique et une seconde forme géométrique.

7. Objet tridimensionnel selon la revendication 5 ou 6, **caractérisé en ce que** la première forme géométrique présente une forme géométrique ponctuelle et/ou que la seconde forme géométrique présente une forme géométrique linéaire.

8. Objet tridimensionnel selon l'une des revendications 1 à 7, **caractérisé en ce qu'au moins** une partie des zones de connexion (7) est formée élastiquement au moins en partie, de sorte que les tensions mécaniques dues à la décélération des sous-objets (6) et/ou de l'objet (1) sont réduites.

9. Objet tridimensionnel selon l'une des revendications 1 à 8, **caractérisé par** un rêve de fente (8) entre des objets partiels côte à côte et/ou superposés (6).

10. Objet tridimensionnel selon la revendication 9, **caractérisé en ce que** le rêve de fente (8) a une largeur comprise entre 1 et 100 µm.

11. Objet tridimensionnel selon l'une des revendications 1 à 10, **caractérisé en ce qu'au moins** une partie des zones de connexion (7) sont formées par solidification de matériaux de construction en poudre et/ou au moins une partie des zones de liaison (7) par la fusion de sections d'objets partiels déjà solidifiées (6).

12. Objet tridimensionnel selon l'une des revendications 1 à 11, **caractérisé en ce qu'au moins** une partie des objets partiels (6) sont reliées entre elles par la formation de zones de connexion correspondantes (7).

13. Objet tridimensionnel selon les revendications 1 à 12, **caractérisé par** au moins deux objets partiels (6) de forme géométrique identique ou différente.

14. Objet tridimensionnel selon l'une des revendications 1 à 13, **caractérisé par** au moins un objet tiers sous la forme d'un élément léger d'une structure légère; étant entendu qu'au moins un sous-objet (6) avec au moins un espace d'accueil limité, notamment fermé, est formé pour accueillir au moins un objet tiers correspondant.

15. Objet tridimensionnel selon l'une des revendications 1 à 14, **caractérisé en ce qu'au moins** une partie des zones de jonction (7) sont formées au moins partiellement en tant que passerelles, ponts, vergetures, barres et similaires ou présentent la forme d'engrenages interconnectés ou d'autres éléments de fermeture de forme.

16. Procédé pour la fabrication d'un objet tridimensionnel (1) par solidification successive de couches d'un matériau de construction en poudre solidifiable par rayonnement, avec les étapes suivantes:
- Formation d'un objet (1) et d'une structure de support (2) à l'aide d'une installation de frittage laser ou de fusion laser, comprenant la formation de l'objet (1) et de la structure de support (2):
- Former la structure de support (2) pour soutenir au moins les sections de l'objet tridimensionnel à fabriquer (1) en solidifiant successivement des couches du matériau de construction,
- Former plusieurs sous-objets individuels formant une partie déterminée de l'objet tridimensionnel à produire (1) en solidifiant successivement des couches du matériau de construction, chaque sous-objet (6) étant formé en surface ou en volume inférieur à l'objet tridimensionnel afin d'obtenir des effets de déformation liés au matériau ou à la fabrication de l'objet tridimensionnel (1), avec au moins un sous-objet (6) formé au moins en partie sur la structure de support (2),
les zones de connexion respectives (7) entre les sous-objets (6) pour la connexion au moins par section des sous-objets (6) sous la formation de l'objet tridimensionnel (1) par solidification successive des couches du matériau de construction et/ou par un dispositif de soudage conçu pour produire des points de soudage ou des billes de soudage;
- Enlever l'objet tridimensionnel (1) de la structure de support (2).
